# EUROPÄISCHE PATENTANMELDUNG

(11) **EP 2 312 233 A2**
(43) Veröffentlichungstag der Anmeldung: **20.04.2011**
(21) Anmeldenummer: 10180532.3
(22) Anmeldetag: 28.09.2010
(51) Int. Cl.: F24J 2/04, F24J 2/26

(54) **Solaranlage mit Solarkollektor und vergrößerter Absorbereinheit**

(30) Priorität: 15.10.2009 DE 102009049481
(71) Anmelder: Robert Bosch GmbH, 70442 Stuttgart (DE)
(72) Erfinder: Clement, Uwe, 73114, Schlat (DE)

(57) **Zusammenfassung**

Die Erfindung betrifft eine Absorbereinheit (1), insbesondere für einen Solarabsorber einer Solarkollektoreinrichtung (10), umfassend mindestens ein Absorberrohr (2) zur Durchleitung eines Solarfluids und mindestens ein Absorberblech (3) zum Absorbieren von Solarenergie, an welchem das mindestens eine Absorberrohr (2) in wärmeleitender Wirkverbindung angebracht ist. Die Erfindung betrifft weiter eine Solarkollektoreinrichtung mit einer Absorbereinheit und eine Solaranlage mit einer Solarkollektoreinrichtung.

Es ist eine Aufgabe der Erfindung, eine Solaranlage, eine Solarkollektoreinrichtung und eine Absorbereinheit zu schaffen, deren Wirkungsgrad auf einfache Weise verbessert ist. Insbesondere ist es eine Aufgabe, die nutzbare Absorberfläche mit einfachen Mitteln zu vergrößern.

Gekennzeichnet sind die Solaranlage, die Solarkollektoreinrichtung und die Absorbereinheit (1) dadurch, dass an mindestens einem Seitenbereich des Absorberblechs (3) mindestens ein Flächenteil (4) angebracht ist, um eine nutzbare Absorptionsfläche der Absorbereinheit (1) zu vergrößern.

## Beschreibung

Die Erfindung betrifft eine Absorbereinheit, insbesondere für einen Solarabsorber einer Solarkollektoreinrichtung, nach dem Oberbegriff des Patentanspruches 1.

Weiter betrifft die Erfindung eine Solarkollektoreinrichtung zum Übertragen einer Solarenergie auf ein die Solarkollektoreinrichtung durchströmendes Solarfluid nach dem Oberbegriff des Anspruchs 6.

Zudem betrifft die Erfindung eine Solaranlage zur Gewinnung von Solarenergie mittels Solarkollektoren, nach dem Oberbegriff des Anspruchs 8.

Absorber für Solarkollektoren sowie Solarkollektoren und Solaranlagen sind aus dem allgemeinen Stand der Technik bekannt. Bei den bekannten solarthermischen Kollektoren ist der Absorber in einem Gehäuse untergebracht. Absorber gemäß dem Stand der Technik sind nach dem Prinzip Rohr/Blech aufgebaut, das heißt, die Rohre sind an einem Blech angelötet oder angeschweißt. Das Absorberblech reicht dabei bis an die Seitenwände des Gehäuses. Über die Seitenwände des Gehäuses ist ein Abstand des Absorbers von der Glasabdeckung definiert. Bei vielen Solarkollektoren gemäß dem Stand der Technik ist der Wirkungsgrad noch nicht voll ausgeschöpft, gerade auch, da der Sonnenstand sich zu den Solarkollektoren verändert. Über aufwendige Nachführsysteme ist ein Wirkungsgrad verbessert, allerdings sind solche Nachführsysteme teuer und wartungsintensiv.

Der Erfindung liegt die Aufgabe zugrunde, eine Solaranlage, eine Solarkollektoreinrichtung und eine Absorbereinheit zu schaffen, deren Wirkungsgrad auf einfache Weise verbessert ist. Insbesondere ist es eine Aufgabe, die nutzbare Absorberfläche mit einfachen Mitteln zu vergrößern.

Erfindungsgemäß wird dies durch die Gegenstände mit den Merkmalen des Patentanspruches 1, des Patentanspruchs 6 und des Patentanspruchs 8 gelöst. Vorteilhafte Weiterbildungen sind den Unteransprüchen zu entnehmen.

Die erfindungsgemäße Absorbereinheit ist dadurch gekennzeichnet, dass bei der Absorbereinheit, insbesondere für einen Solarabsorber einer Solarkollektoreinrichtung, umfassend mindestens ein Absorberrohr zur Durchleitung eines Solarfluids und mindestens ein Absorberblech zum Absorbieren von Solarenergie, an welchem das mindestens eine Absorberrohr in wärmeleitender Wirkverbindung angebracht ist, vorgesehen ist, dass an mindestens einem Seitenbereich des Absorberblechs mindestens ein Flächenteil angebracht ist, um eine nutzbare Absorptionsfläche der Absorbereinheit zu vergrößern. Dadurch, dass ein zusätzliches Flächenteil vorgesehen ist, ist die nutzbare Fläche der Absorbereinheit wirkungsvoll vergrößert. Durch eine entsprechende Anordnung des Flächenteils, insbesondere in einem Seitenbereich, ist der Seitenbereich zur Solarenergiegewinnung nutzbar.

In einer Ausführungsform der erfindungsgemäßen Absorbereinheit ist vorgesehen, dass das Flächenteil winklig abstehend zu dem Absorberblech an dem Absorberblech angeordnet ist.

Bei einer weiteren Ausführungsform ist vorgesehen, dass das Flächenteil sich über eine gesamte Länge einer Seite des Absorberblechs erstreckt.

In noch einer weiteren Ausführungsform der vorliegenden Erfindung ist vorgesehen, dass das Flächenteil einteilig mit dem Absorberblech ausgebildet ist.

Ein Ausführungsbeispiel der erfindungsgemäßen Absorbereinheit sieht weiter vor, dass das Flächenteil absorberrohrfrei ausgebildet ist.

Die erfindungsgemäße Solarkollektoreinrichtung zum Übertragen einer Solarenergie auf ein die Solarkollektoreinrichtung durchströmendes Solarfluid, mit mindestens einer Solarabsorbereinheit, ist dadurch gekennzeichnet, dass die Solarabsorbereinheit als erfindungsgemäße Absorbereinheit ausgebildet ist, umfassend mindestens ein Absorberrohr zur Durchleitung eines Solarfluids und mindestens ein Absorberblech zum Absorbieren von Solarenergie, an welchem das mindestens eine Absorberrohr in wärmeleitender Wirkverbindung angebracht ist, wobei an mindestens einem Seitenbereich des Absorberblechs mindestens ein Flächenteil angebracht ist, um eine nutzbare Absorptionsfläche der Absorbereinheit zu vergrößern. Mit der vergrößerten Absorptionsfläche ist ein verbesserter Wirkungsgrad bei der Solarenergiegewinnung realisierbar, insbesondere deshalb, da jetzt die Seitenbereiche für die Solarenergiegewinnung zusätzlich nutzbar sind.

In einer bevorzugten Ausführungsform der vorliegenden Erfindung ist deshalb vorgesehen, dass mindestens ein Flächenteil zumindest teilweise in einer Seitenwandung eines Solarkollektorgehäuses angeordnet ist.

Die erfindungsgemäße Solaranlage zur Gewinnung von Solarenergie mittels Solarkollektoren ist dadurch gekennzeichnet, dass mindestens ein Solarkollektor, insbesondere mehrere miteinander gekoppelte Solarkollektoren, gemäß einer erfindungsgemäßen Solarkollektoreinrichtung ausgebildet sind.

Mit der erfindungsgemäßen Absorbereinheit, der erfindungsgemäßen Solarkollektoreinrichtung und der erfindungsgemäßen Solaranlage werden insbesondere die folgenden Vorteile realisiert:
Aufgrund der vergrößerten nutzbaren Absorberfläche mit dem zusätzlichen Flächenteil ist in einem baulich begrenzten Absorber ein verbesserter Wirkungsgrad realisierbar. Durch die Vergrößerung der nutzbaren Fläche durch eine einfache Konstruktion mit mindestens einem zusätzlichen Flächenteil ist eine kostengünstige und technisch einfache Nutzung der Sonnenenergie, welche insbesondere bei schrägem Lichteinfall auf die Seitenwände des Kollektor auftrifft, gewährleistet. Zudem ist bei Anordnung des Flächenteils in dem Seitenbereich, insbesondere in den Seitenwänden, eine zusätzliche Stabilisierung der Seitenwände realisiert, sodass bei geringen Wanddicken eine hohe Steifigkeit des Gehäuses vorliegt. Damit ist gerade auch bei tief stehender Sonne eine zusätzliche Nutzung der auf die Seitenwände einfallenden Sonnenstrahlung möglich. Daraus ergibt sich der höhere Wirkungsgrad und solare Jahresertrag. Ist das Flächenteil als Metallteil ausgebildet, ergibt sich die zusätzliche Stabilisierung der Seitenwände durch das Metallblech, sodass die Wanddicken reduziert werden können, ohne die Steifigkeit des Gehäuses nachteilig zu verändern. Durch die geringeren Wanddicken ergeben sich geringer Herstellkosten und damit verbunden auch größere Absorberflächen bei gleichen Außenabmessungen des Kollektors. Durch geeignete Fertigungsverfahren ist kein zusätzlicher Fertigungsaufwand erforderlich, beispielsweise wenn der Solarkollektor mittels eines PUR-Schäumverfahrens hergestellt wird.

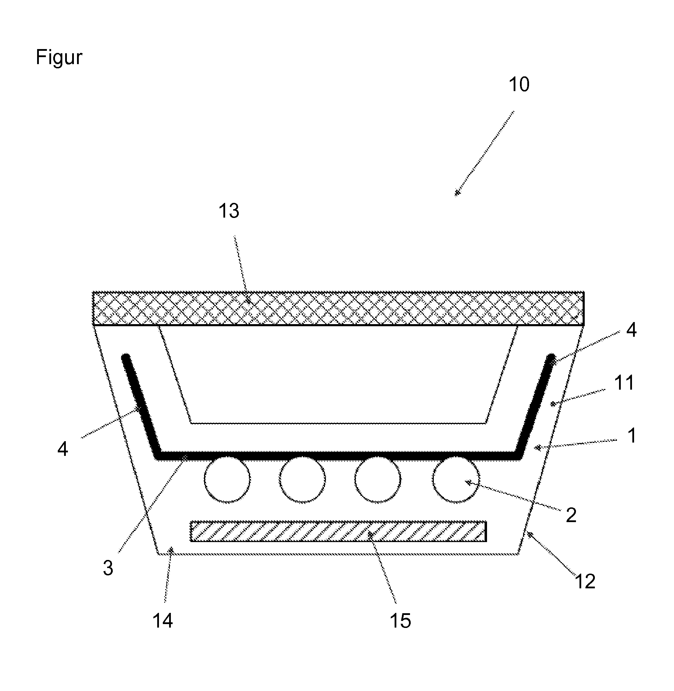

Die Zeichnung stellt ein Ausführungsbeispiel der Erfindung dar und zeigt in der einzigen Figur:
schematisch in einem Querschnitt eine Solarkollektoreinrichtung mit einer Absorbereinheit.

Die Fig. zeigt schematisch in einem Querschnitt eine Solarkollektoreinrichtung 10 mit einer Absorbereinheit 1. Die Solarkollektoreinrichtung 10 zum Übertragen einer Solarenergie auf ein die Solarkollektoreinrichtung 10 durchströmendes Solarfluid weist ein Solarkollektorgehäuse 12 auf. Das Solarkollektorgehäuse 12 ist seitlich durch eine Seitenwandung 11 begrenzt. Auf der Seitenwandung 11 liegt eine lichtdurchlässige Abdeckung, die in dem dargestellten Ausführungsbeispiel als Glasabdeckung 13 ausgeführt ist, auf. Über hier nicht dargestellte Verbindungselemente ist die Glasabdeckung mit der Seitenwandung 11 verbunden. Nach unten ist das Solarkollektorgehäuse 12 durch eine Bodenwandung 14 begrenzt. Die Bodenwandung 14 und die Seitenwandung 11 bilden eine Art schalenförmiges Gehäuse aus.

In die Wandungen 11 und 14 ist die Absorbereinheit 1 integriert. Die Absorbereinheit 1 umfasst in dem dargestellten Ausführungsbeispiel vier Absorberrohre 2 zur Durchleitung eines Solarfluids. Weiter umfasst die Absorbereinheit 1 ein Absorberblech 3, an welchem die Absorberrohre 2 in wärmeleitender Wirkverbindung angebracht, beispielsweise angeschweißt sind. An Seitenbereichen des Absorberblechs 3 ist jeweils ein Flächenteil 4 ausgebildet, um eine nutzbare Absorptionsfläche der Absorbereinheit 1 zu vergrößern. Die Flächenteile 4 sind winklig abstehend zu dem Absorberblech 3 ausgebildet. Vorzugsweise schließen das Absorberblech 3 und die Flächenteile 4 jeweils Winkel größer 90° ein. Dabei erstrecken sich die Flächenteile 4 über eine gesamte Länge einer Seite des Absorberblechs 3. In der dargestellten Ausführungsform sind die Flächenteile 4 integriert, das heißt einteilig mit dem Absorberblech 3 ausgebildet. Dies ist beispielsweise durch Abkanten oder Biegen des Absorberblechs 3 an den Seitenbereichen realisiert. An den Flächenteilen 4 sind keine Absorberrohre 2 angeordnet, sodass die Flächenteile 4 absorberrohrfrei ausgebildet sind.

Die gesamte Absorbereinheit 1 ist in das Solarkollektorgehäuse 12 integriert. Genauer ist die Absorbereinheit 1 in die Seitenwandung 11 und die Bodenwandung 14 eingebettet. Das Absorberblech 3 mit den daran angeordneten Absorberrohren 2 ist in der Bodenwandung 14 eingebettet. Die Flächenteile 4 ragen von dem Absorberblech 3 in die Seitenwandung 11 ab. Für diese Anordnung ist die Wandung 11, 14 des Solarkollektorgehäuses 12 nach einem Schäumverfahren, insbesondere nach einem PUR-Schäumverfahren hergestellt. Dabei wird die Absorbereinheit 1 in ein Schäumwerkzeug eingelegt und dann umschäumt. Die fertige Umschäumung bildet dann die Wandungen 11, 14, in welche die Absorbereinheit 1 eingebettet ist. Neben der Absorbereinheit 1 ist in der Bodenwandung 14 noch eine Isolierschicht 15 eingebettet. Diese Isolierschicht minimiert - wie nach dem Stand der Technik üblich - die Wärmeverluste zur Unterseite der Solarkollektoreinrichtung 10.

Das Absorberblech 3 und die Flächenteile 4 stehen in wärmeleitender Verbindung. Die Flächenteile 4 stellen somit hinsichtlich einer Wärmeleitung eine Verlängerung des Absorberblechs 3 dar. Da das Absorberblech 3 auf diese Weise verlängert bis in die Seitenwände 11 hineinreicht, wird über eine Wärmeleitung absorbierte Wärme aus der Seitenwand 11 an das Solarfluid in den Absorberrohren 2 übertragen. Auf diese Weise ist die an den Seitenwänden 11 aus der Solarenergie gewonnene Wärme nutzbar. Die Seitenwände 11 sind vorzugsweise nicht höher als etwa 3 bis 5 cm. Diese Distanz ist so ausgewählt, dass eine Wärmeleitung von den Seitenwänden 11 zu dem Absorberblech 3 effizient durchführbar ist. Das heißt, die Distanz ist so bemessen, dass diese sich mit metallischen Absorberblechen per Wärmeleitung gut überbrücken lässt. Gleichzeitig hat das Blech eine stabilisierende und verstärkende Wirkung, vergleichbar mit Eisenarmierungen in Betonbauteilen.

## Patentansprüche

1. Absorbereinheit (1), insbesondere für einen Solarabsorber einer Solarkollektoreinrichtung (10), umfassend mindestens ein Absorberrohr (2) zur Durchleitung eines Solarfluids und mindestens ein Absorberblech (3) zum Absorbieren von Solarenergie, an welchem das mindestens eine Absorberrohr (2) in wärmeleitender Wirkverbindung angebracht ist,
**dadurch gekennzeichnet, dass** an mindestens einem Seitenbereich des Absorberblechs (3) mindestens ein Flächenteil (4) angebracht ist, um eine nutzbare Absorptionsfläche der Absorbereinheit (1) zu vergrößern.

2. Absorbereinheit (1) nach Anspruch 1,
**dadurch gekennzeichnet, dass** das Flächenteil (4) winklig abstehend zu dem Absorberblech (3) an dem Absorberblech (3) angeordnet ist.

3. Absorbereinheit (1) nach Anspruch 1 oder 2,
**dadurch gekennzeichnet, dass** das Flächenteil (4) sich über eine gesamte Länge einer Seite des Absorberblechs (3) erstreckt.

4. Absorbereinheit (1) nach einem der Ansprüche 1 bis 3,
**dadurch gekennzeichnet, dass** das Flächenteil (4) einteilig mit dem Absorberblech (3) ausgebildet ist.

5. Absorbereinheit (1) nach einem der Ansprüche 1 bis 4,
**dadurch gekennzeichnet, dass** das Flächenteil (4) absorberrohrfrei ausgebildet ist.

6. Solarkollektoreinrichtung (10) zum Übertragen einer Solarenergie auf ein die Solarkollektoreinrichtung (10) durchströmendes Solarfluid, mit mindestens einer Solarabsorbereinheit,
**dadurch gekennzeichnet, dass** die Solarabsorbereinheit als Absorbereinheit (1) nach einem der vorherigen Ansprüche 1 bis 5 ausgebildet ist.

7. Solarkollektoreinrichtung (10) nach Anspruch 6,
**dadurch gekennzeichnet, dass** mindestens ein Flächenteil (4) zumindest teilweise in einer Seitenwandung (11) eines Solarkollektorgehäuses (12) angeordnet ist.

8. Solaranlage zur Gewinnung von Solarenergie mittels Solarkollektoren,
**dadurch gekennzeichnet, dass** mindestens ein Solarkollektor, insbesondere mehrere miteinander gekoppelte Solarkollektoren, gemäß einer Solarkollektoreinrichtung (10) nach Anspruch 6 oder 7 ausgebildet sind.
